# EUROPÄISCHE PATENTANMELDUNG

(11) **EP 4 012 522 A1**
(43) Veröffentlichungstag der Anmeldung: **15.06.2022**
(21) Anmeldenummer: 20212456.6
(22) Anmeldetag: 08.12.2020
(51) Int. Cl.: G05B 19/408

(54) **KORREKTUR EINES LEITWERTES UND/ODER EINES FOLGEWERTES EINER GLEICHLAUFFUNKTION**

(71) Anmelder: Siemens Aktiengesellschaft, 80333 München (DE)
(72) Erfinder: Heber, Tino, 09599 Freiberg (DE); Hess, Thomas, 09212 Limbach-Oberfrohna (DE); Kram, Raimund, 91056 Erlangen (DE); Schönberger, Elena, 91052 Erlangen (DE); Kohlhas, Bernhard, 91315 Höchstadt an der Aisch (DE); Popp, Manfred, 90513 Zirndorf (DE)

(57) **Zusammenfassung**

Die Erfindung betrifft ein Verfahren zur Korrektur eines Leitwertes und/oder eines Folgewertes einer Gleichlauffunktion sowie eine zugehörige Steuerungseinrichtung, wobei der Leitwert und/oder der Folgewert mittels einer Korrekturfunktion korrigiert wird/werden, wobei ein Korrekturbereich der Korrekturfunktion mittels eines effektiven Leitwertweges vorgegeben wird, wobei ein Wirkbeginn der Korrekturfunktion mittels einer effektiven Leitwertposition vorgegeben wird, wobei der korrigierte Leitwert einer Gleichlauffunktion als Eingabe übergeben wird und/oder der korrigierte Folgewert als Sollwert an einer Folgeachse ausgegeben wird.

## Beschreibung

Die Erfindung betrifft ein Verfahren zur Korrektur eines Leitwertes und/oder eines Folgewertes einer Gleichlauffunktion sowie eine zugehörige Steuerungseinrichtung.

In vielen Anwendungsbereichen in der Industrieautomatisierung sind mehrere Antriebsachsen beteiligt. Beispielsweise sind mehrere Achsen zu synchronisieren oder aufeinander abzustimmen, um ein präzises Bewegen, Verarbeiten oder Bearbeiten zu erreichen. In Bearbeitungsmaschinen oder Produktionsmaschinen oder seltener auch Werkzeugmaschinen und insbesondere bei Druckmaschinen, Querschneidemaschinen oder Schlauchbeutelmaschinen, sind zwei oder mehr Achsen beispielsweise derart aufeinander abzustimmen, dass ein Gleichlauf erzielt wird. Beispielsweise sind im Gleichlaufverbund arbeitende Achsen im Bereich von Druckmaschinen nötig für technologische Aufgabenstellungen wie beispielsweise die Farbenaufbringung über Druckwalzen sowie das Zuschneiden und Falten über Falzapparate oder eine fliegende Schere im Umfeld von Verpackungsmaschinen oder in anderen Anwendungen ein Betreiben eines Querschneiders.

Die Idee des Gleichlaufes besteht dabei darin, dass eine Position einer Folgeachse unter Einhaltung des Gleichlaufgesetzes mit der Position einer Leitachse möglichst gut oder möglichst exakt übereinstimmt. Ein solcher Gleichlauf soll flexibel sowohl in einheitlichen Systemen, in welchen Achsen bzw. die Sollwerte, welche an den jeweiligen Achsen vorgegeben werden, innerhalb einer Steuerung berechnet werden, als auch in nicht-einheitlichen Systemen, bei welchen beispielsweise ein verteilter Gleichlauf vorliegt. Beim verteilten Gleichlauf werden verschiedene Achsen bzw. deren Sollwerte in verschiedenen Steuerungskomponenten berechnet, welche über einen gemeinsamen Bus kommunizieren. Ferner können nichteinheitliche Systeme durch unterschiedliche Berechnungstakte für unterschiedliche Achsen innerhalb einer Steuerungskomponente entstehen. Ferner kann auch bei unterschiedlichen dynamischen Eigenschaften verschiedener Achsen von einem nicht-einheitlichen System gesprochen werden.

Zur präzisen Umsetzung von Gleichlaufanwendungen ist es nötig, Korrekturen an den Werten, die der Folgeachse übergeben werden, vorzunehmen. Korrekturen sollen an der Folgeachse ausgeführt oder herausgefahren werden, um möglichst exakt mit der Leitachse übereinzustimmen.

Vor diesem Hintergrund ist es eine Aufgabe der vorliegenden Erfindung eine Korrektur eines Gleichlaufs zwischen einer Leit- und mindestens einer Folgeachse zu verbessern. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zur Korrektur eines Leitwertes und/oder eines Folgewertes einer Gleichlauffunktion, wobei der Leitwert und/oder der Folgewert mittels einer Korrekturfunktion korrigiert wird/werden, wobei ein Korrekturbereich der Korrekturfunktion mittels eines effektiven Leitwertweges vorgegeben wird, wobei ein Wirkbeginn der Korrekturfunktion mittels einer effektiven Leitwertposition vorgegeben wird, wobei der korrigierte Leitwert einer Gleichlauffunktion als Eingabe übergeben wird und/oder der korrigierte Folgewert als Sollwert an einer Folgeachse ausgegeben wird.

Insbesondere sollen Korrekturen am Leitwert vorgenommen werden, der der Gleichlauffunktion übergeben wird, oder alternativ oder zusätzlich am mittels der Gleichlauffunktion ermittelten Folgewert. Die Korrektur wirkt somit an der Folgeachse. Die Korrekturen wirken letztlich auf die Folgeachse und werden entweder auf den Leitwert vor der Gleichlauffunktion (leitwertseitige Korrektur) oder auf den Folgewert nach der Gleichlauffunktion (folgewertseitige Korrektur) aufgebracht. Somit wirkt sich die Korrektur auf die Position der Folgeachse aus und wird von dieser dann mitherausgefahren.

Der effektive Leitwertweg wird anhand des Wirkbeginns und einer Angabe einer relativen Länge oder einer weiteren absoluten effektiven Leitwertposition als Endposition definiert.

Vorteilhaft wird mittels der Korrekturfunktion mit Korrekturbereich und Wirkbeginn ein leitwertbezogenes Herausfahren von für den korrekten Gleichlauf notwendigen Korrekturen ermöglicht. Dabei müssen insbesondere auf vorteilhafte Weise kein gesonderter Gleichlauf oder separate Kurvenscheiben programmiert werden, die vorgeschaltet sein müssten, damit eine Korrektur des Leitwerts erfolgen kann. Auch eine für die Korrektur des Folgewertes vorgesehene vorgelagerte Gleichlauffunktion, d. h. eine zusätzliche Gleichlauffunktion auf den Leitwert und Aufaddition des Funktionswertes an der Folgeachse, kann entfallen. Ebenso wenig ist es notwendig, Korrekturen des Leitwerts oder des Folgewerts mittels Dynamikprofilen über die Zeit starr und unabhängig von einer Veränderung des Leitwerts abzufahren.

Durch die vorgeschlagene Lösung wird somit einerseits das aufwändige Programmieren mit gegebenenfalls mehreren Gleichlauffunktionen und mehreren Koordinatensystemen sowie eigens definierten Kurvenscheiben vermieden, andererseits wird mittels des anhand des Leitwerts definierten Korrekturbereichs ferner erreicht, dass die Korrektur abhängig von der Dynamik des Leitwerts eingebracht wird, und nicht etwa starr zeitabhängig. Mit dem vorgeschlagenen Verfahren wird erreicht, dass bei einer schnellen Änderung des Leitwerts entsprechend auch Korrekturen schnell eingebracht werden, bei einer langsamen Änderung des Leitwerts hingegen entsprechend langsamer. Ein Einbringen eines festen Betrages in einer fixen, bestimmten vorgegebenen Zeitspanne entfällt somit vorteilhaft.

Bei einer Korrektur des Leitwerts erfolgt in Ausführungen eine direkte Integration in Bausteine des PLCopen-Standards, insbesondere in die Bausteine MC_PhasingRelative oder MC_PhasingAbsolute. Bei einer Korrektur des Folgewerts ist eine Erweiterung des PLCopen-Bausteins MC MoveSuperimposed realisierbar oder die Definition separater Bausteine, beispielsweise MC_OffsetRelative und MC_OffsetAbsolute, wobei letzteres der analogen Definition zu den Bausteinen MC_PhasingRelative oder MC_PhasingAbsolute lediglich für die Korrektur nach Anwendung der Gleichlauffunktion entspricht.

Der angegebene Korrekturbereich wird durch das Abfahren über den Leitwert zwangsläufig eingehalten. Vorteilhaft wird die Korrektur mit der Geschwindigkeit des Leitwerts ausgeführt. Die Leitwertpositionsangabe wird in einer Variante auf den Leitwert vor der leitwertbezogenen Korrektur oder in einer anderen Variante auf den Leitwert nach der leitwertbezogenen Korrektur angegeben.

Die Korrekturfunktion kann somit eine leitwertbezogene Leitwertkorrekturfunktion oder eine leitwertbezogene Folgewertkorrekturfunktion sein. Anders ausgedrückt kann eine leitwertseitige leitwertbezogene Korrektur oder eine folgeseitige leitwertbezogene Korrektur erfolgen. Es können ferner beide Werte, der Leitwert und der Folgewert der Gleichlauffunktion, mit der Korrekturfunktion korrigiert werden, so dass beide Korrekturmechanismen hintereinander wirken und somit während eines Gleichlaufs gleichzeitig aktiv sind.

Gemäß einer Ausgestaltung wird die Korrekturfunktion mittels einer systembestimmten Funktion, insbesondere einer Polynomfunktion, insbesondere einer Polynomfunktion mit trigonometrischem Anteil, über den Leitwert abgefahren. Vorteilhaft erfolgt die Bestimmung des Profils für das Einbringen der Korrektur durch das System, d. h. direkt in die Programmierung eines Gleichlaufsystems integriert. Beispielsweise erfolgt eine Programmierung über PLCopen-Befehle oder PLCopenkonsistente Befehle, sodass eine direkte Einbindung in die Programmierung und in die Lösungsdefinition nach dem PLCopen-Standard erfolgen kann. Besondere kann somit eine durchgängige Programmierung nachPLCopen Part1 - Function Blocks for Motion Control erfolgen.

Die Korrektur wird beispielsweise als systembestimmte Polynomfunktion über den Leitwertweg eingebracht. Aus dem Korrekturwert, also einem Betrag einer einzubringenden Korrektur und dem vom Anwender angegebenen Leitwertweg wird abhängig von Randbedingungen im Startpunkt und Endpunkt ein Polynomprofil über den Leitwert bestimmt.

Gemäß einer Ausgestaltung wird die Korrekturfunktion mittels einer Korrekturstartposition und einer Korrekturendposition definiert. Neben einer direkten Vorgabe des Korrekturbereichs der Korrekturfunktion mittels eines vom Anwender angegebenen effektiven Leitwertweges, also eines Leitwertbereiches, kann alternativ die Angabe einer Korrekturendposition, "bis Leitwertposition" erfolgen. Andernfalls ergibt sich diese aus dem angegebenen Leitwertweg für die Korrekturausführung.

Gemäß einer Ausgestaltung werden der Wirkbeginn und der effektive Leitwertweg optimal bezogen auf einen auszuführenden Prozess gewählt. Wenn beispielsweise ein Messer eines Querschneiders oder eine Schere in einer Applikation mit fliegender Schere nicht im Eingriff ist, kann der gesamte verbleibende Bereich des Leitwerts für die Korrektur genutzt werden. Als geeigneter Korrekturbereich kommt der Bereich des Leitwertes in Frage, bei dem die Folgeachse nicht im Eingriff mit anderen Prozessteilnehmern ist.

Gemäß einer Ausgestaltung wird die Korrekturfunktion als eine Funktion in Abhängigkeit von einer Leitwertposition definiert. Insbesondere wird der Wert oder der Betrag einer einzubringenden Korrektur über der Leitwertposition definiert.

Gemäß einer Ausgestaltung ist die Korrekturfunktion stetig mindestens in der ersten und zweiten Ableitung. Somit werden abrupte Übergänge im Beschleunigungs- und Verzögerungsverlauf und damit abrupte oder stoßbehaftete Übergänge im Kraft- und Momentenverlauf vermieden. Die Stetigkeitsanforderung wird insbesondere innerhalb der Funktion und auch bzgl. der in den Randpunkten vorliegenden Werte erfüllt.

Ist die Korrekturfunktion geschwindigkeitsstetig und beschleunigungsstetig ausgeführt, werden vorteilhaft für die Mechanikschonung optimierte Verfahrprofile erreicht.

Gemäß einer Ausgestaltung ist die Korrekturfunktion eine Polynomfunktion, ein Spline, und/oder eine trigonometrische Funktion. Es können beispielsweise Polynomfunktionen höheren Grades, insbesondere fünften Grades oder höherer Ordnung, oder Splines vierter Ordnung oder höher oder trigonometrische Funktionen vorgesehen sein und insbesondere Kombinationen daraus.

Gemäß einer Ausgestaltung wird zur Definition der Korrekturfunktion ein maximaler Korrekturwert in Abhängigkeit von zumindest einer der Größen Leitwertgeschwindigkeit, aktueller Getriebefaktor der Gleichlauffunktion, maximale Dynamikwerte der Achse oder vorgegebener effektiver Leitwertweg ermittelt. Somit sind optional weitere Kriterien vorgebbar zur Bestimmung einer geeigneten Korrekturfunktion. Dabei kann bei der einzubringenden Korrektur neben dem Korrekturbereich auch ein Maximalbetrag der Korrektur beispielsweise je nach Dynamik der beteiligten Achsen geeignet gewählt werden.

Gemäß einer Ausgestaltung wird die Korrekturfunktion mit einem Beenden des Gleichlaufs beendet. Bezogen auf einen neuen Gleichlauf müsste somit die Korrekturfunktion neu aufgesetzt werden.

Die Erfindung betrifft ferner eine Steuerungseinrichtung zur Korrektur eines Leitwertes und/oder eines Folgewertes einer Gleichlauffunktion, aufweisend einen Steuerungsprogrammbaustein zur Durchführung des Verfahrens nach einem der vorstehend beschriebenen Ausgestaltungen. Die Steuerungseinrichtung ist vorzugsweise eine Steuerung zum Betreiben mindestens zweier Achsen im Gleichlauf. Der zu korrigierende Leitwert und/oder der zu korrigierende Folgewert befinden sich dabei auf derselben Steuerung.

Gemäß einer Ausgestaltung ist der Steuerungsprogrammbaustein als ein PLCopen Baustein ausgebildet. Vorteilhaft wird mittels des Steuerungsprogrammbausteins eine funktionale Erweiterung zu standardisierten PLCopen Programmbausteinen ermöglicht.

Die Erfindung wird nachfolgend anhand von Ausführungsbeispielen mit Hilfe der Figuren näher erläutert. Es zeigen:
- Figur 1: eine schematische Darstellung zur Veranschaulichung des Korrekturverfahrens gemäß einem ersten Ausführungsbeispiel;
- Figur 2: eine schematische Darstellung eines Diagramms einer Korrekturfunktion gemäß dem ersten Ausführungsbeispiel;
- Figur 3: eine schematische Darstellung zur Veranschaulichung des Korrekturverfahrens gemäß einem zweiten Ausführungsbeispiel;
- Figur 4: eine schematische Darstellung zur Veranschaulichung des Korrekturverfahrens gemäß einem dritten Ausführungsbeispiel.

In den Figuren sind funktionsgleiche Elemente mit denselben Bezugszeichen versehen, sofern nichts anderes angegeben ist.

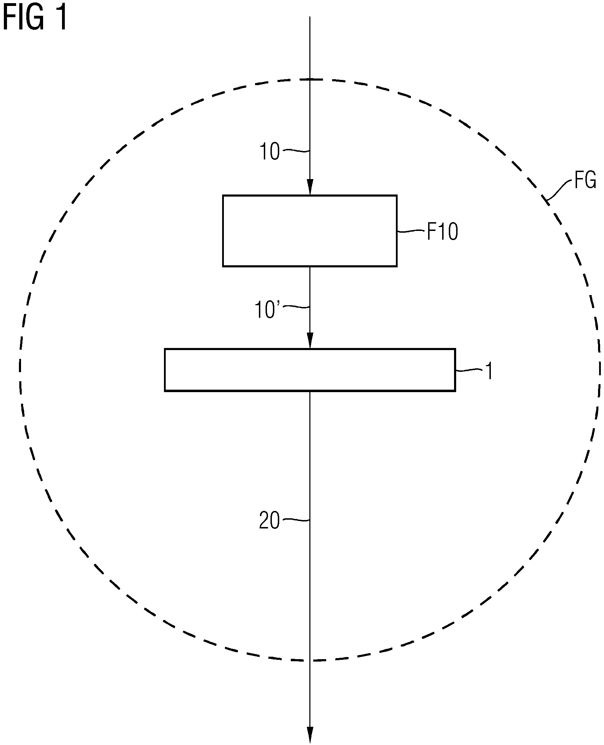

In Figur 1 ist ein Korrekturverfahren zur Korrektur eines Leitwertes gemäß einem ersten Ausführungsbeispiel der Erfindung veranschaulicht. In dem kreisförmigen Bereich FG ist ein Ablaufdiagramm eines Korrekturverfahrens für eine Gleichlauffunktion 1 umfasst. Ziel und Aufgabe der Gleichlauffunktion 1 ist es, aus einem Leitwert 10, der von einer Leitachse empfangen wird, einen Folgewert 20 zu generieren, der einer Folgeachse als Sollwert übergeben wird. Dabei kann die Gleichlauffunktion 1 beispielsweise einen Getriebegleichlauf oder einen Kurvenscheibengleichlauf umsetzen. Beispielsweise wird ein Querschneider im Gleichlauf betrieben.

Bevor der Leitwert 10 an die Gleichlauffunktion 1 übergeben wird, wird er über einen Leitwertkorrektur-Funktionsbaustein F10 korrigiert. Der Leitwertkorrektur-Funktionsbaustein F10 basiert auf dem PLCopen Standard. Dabei werden die PLCopen-Funktionsbausteine MC_PhasingAbsolute oder MC_PhasingRelative eingesetzt, mittels welcher der effektive Leitwert aus Sicht der Folgeachse verschoben wird. Daraus resultiert an der Folgeachse ein korrigierter Leitwert 10' für die Gleichlauffunktion 1. Der tatsächlich anstehende Leitwert des Leitwertinterfaces wird dabei an der Leitachse nicht verschoben, nicht verändert. Die Leitwertkorrektur kann entweder relativ, d.h. jeweils additiv auf die bereits vorhandene Korrektur, oder als absolute Korrektur erfolgen.

Der Leitwert 10 setzt sich als effektiver Leitwert aus dem Leitwert des Leitwertinterfaces und dem additiven Leitwert zusammen.

Der korrigierte Leitwert 10' der Gleichlauffunktion 1 nach der Phasing Funktion setzt sich aus dem Leitwert des Leitwertinterfaces, dem additiven Leitwert und der Verschiebung des effektiven Leitwerts durch die Phasing Befehle zusammen.

Die Korrektur, die im Betrieb eines Querschneiders an der Folgeachse umgesetzt werden soll, ergibt sich beispielsweise aus Druckmarken, die am Leitwert gemessen werden. Bei Anwendungen, in welchen der Leitwert druckmarkenbehaftet ist, empfiehlt sich die Anwendung der Korrektur des Leitwertes vor Übergabe an die Gleichlauffunktion, so dass quasi die Gleichlauffunktion korrigiert wird.

Der PhaseShift wirkt als Verschiebung auf den effektiven Leitwert der Leitachse. Der effektive Leitwert wird somit gestreckt oder gestaucht.

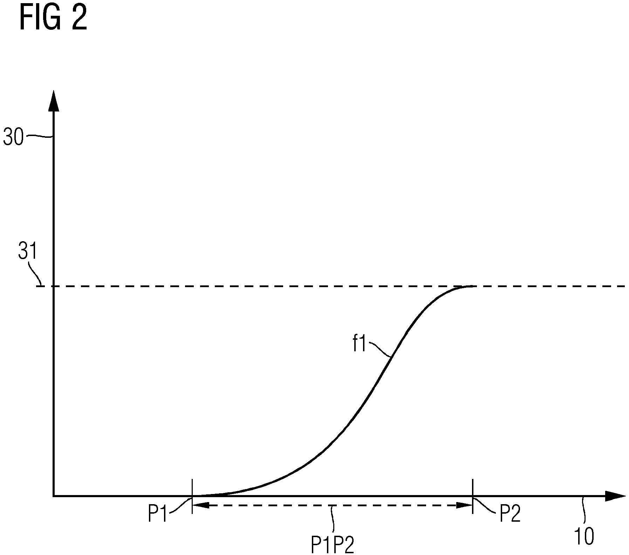

Zur Erläuterung wird zusätzlich Figur 2 herangezogen. Die Abszisse 10 des dort gezeigten Koordinatensystems trägt den Leitwert auf, die Ordinate 30 trägt den einzubringenden Korrekturwert auf. Es ist eine Korrekturfunktion f1 gezeigt, die als Polynomfunktion ausgebildet ist, welche stetig in der ersten und zweiten Ableitung und zu den vorliegenden Bedingungen in den Randpunkten ist. Es ist zudem der effektive Leitwertweg P1P2 gezeigt mit einer Korrekturstartposition P1. Der effektive Leitwertweg P1P2 kann alternativ indirekt mittels einer Korrekturendposition P2 definiert sein.

Der PhaseShift wird über den effektiven Leitwertweg P1P2 beispielsweise sofort oder ab einer angegebenen effektiven Leitwertposition als Korrekturstartposition P1 herausgefahren. Der effektive Leitwertweg kann in einer aktuellen Bewegungsrichtung des effektiven Leitwerts liegen oder in positiver Bewegungsrichtung des effektiven Leitwerts oder in negativer Bewegungsrichtung des effektiven Leitwerts.

Die Korrekturen werden nicht über ein zeitbezogenes Geschwindigkeitsprofil, sondern über eine leitwertbezogen Polynomfunktion mit einem möglichen trigonometrischen Anteil ausgeführt.

Das Profil der Phasing Bewegung ist geschwindigkeits- und beschleunigungsstetig. Die Dynamik der Phasing Bewegung ist an die Dynamik des Leitwerts gekoppelt.

Der Folgewert 20 wird dann der Folgeachse übergeben. Der Leitwertkorrektur-Funktionsbaustein F10 ist auf den Getriebe- und Kurvenscheibengleichlauf anwendbar.

Vorteilhaft kann wie im beschriebenen Ausführungsbeispiel eine Applikation mit fliegendem Messer, fliegender Schere o.ä., bei dem beispielswese eingehendes Material wie ein zu schneidendes Brett oder Glas, mit konstanter Geschwindigkeit druckmarkenbehaftet in die im Gleichlauf betriebene Maschine eingebracht werden und die Korrektur an der Folgeachse mittels eines leitwertseitigen leitwertbezogenen Korrekturprofils ausgeführt werden.

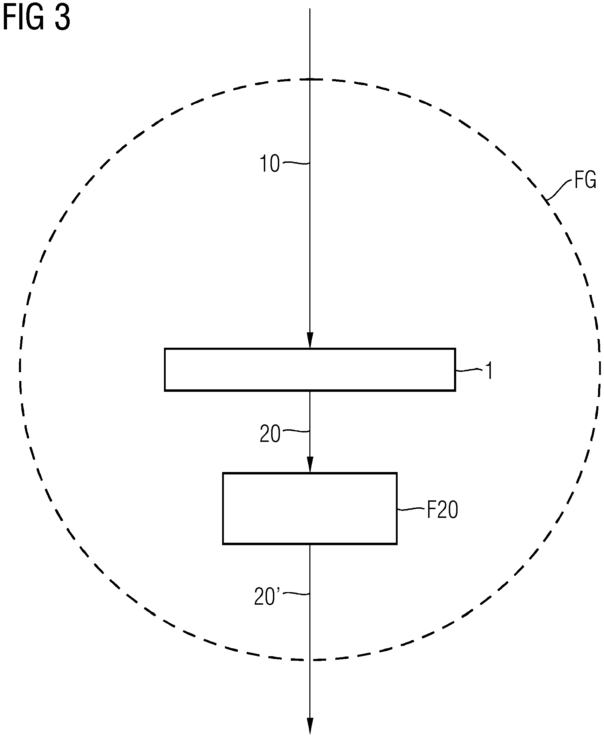

Anhand von Figur 3 wird ein zweites Ausführungsbeispiel der Erfindung beschrieben, das bei einer Schlauchbeutelmaschine zum Einsatz kommt. Dabei soll beispielsweise ein Folienabzug mit einem festen Takt, der nicht verändert werden soll, betrieben werden. Der Maschinenleitwert, der auch der Leitwert für die Folgeachse ist, wird dabei aus dem eingestellten Maschinentakt abgeleitet. Korrekturen, die sich aus den Druckmarken am Folienabzug, also der Folgeachse, ergeben, werden somit vorteilhaft am Folgewert, also nach Anwenden der Gleichlauffunktion, vorgenommen.

Die Korrekturbewegung soll mit dem Erreichen einer bestimmten effektiven Leitwertposition gestartet werden. Es sollen dabei sowohl sequenzielle Druckmarkenkorrekturen ablösend zueinander vorgegeben werden können als auch jeweils nur tendenzielle Korrekturen ermöglicht werden.

Die Korrekturbewegung wird mittels einer leitwertbezogenen Korrektur des Folgewertes umgesetzt. Es ist entsprechend ein Folgewertkorrektur-Funktionsbaustein F20 vorgesehen, der eine leitwertbezogene Korrektur an dem durch die Gleichlauffunktion erzeugten Folgewert 20 vornimmt.

Entsprechende Funktionsbausteine MC_OffsetAbsolute und MC_OffsetRelative sind nach dem PLCopen Schema modelliert und somit an die Struktur der standardisierten Funktionsbausteine angelehnt. Die Funktionsbausteine MC_OffsetAbsolute und MC_OffsetRelative bewirken beim Kurvenscheiben- oder Getriebegleichlauf eine solche zusätzliche leitwertbezogene Verschiebung des Folgewerts. Diese wird an der Folgeachse nach der Gleichlauffunktion 1 wirksam. Die Verschiebung des Folgewerts (Offset) wird wiederum über einen vorgebbaren effektiven Leitwertweg (OffsetDistance) realisiert und erfolgt entweder sofort beim Absetzen des Befehls oder ab einer vorgegebenen effektiven Leitwertposition (StartPosition).

Die Funktionsbausteine MC_OffsetAbsolute/MC_OffsetRelative bewirken eine Verschiebung des Folgewerts 20 nach der Gleichlauffunktion 1 um einen zusätzlichen Offset. Die Position der Leitachse bzw. der Leitwert 10 wird dadurch nicht beeinflusst, es erfolgt nur eine folgewertseitige Korrektur an der Folgeachse, die aber leitwertbezogen ausgeführt wird.

Der Offsetbezug kann dabei entweder relativ, d.h. jeweils additiv auf die bereits vorhandene Verschiebung, oder absolut erfolgen.

Eine typische industrielle Anwendung der Offset Funktion auf den Kurvenscheibengleichlauf für eine leitwertbezogene Korrektur des Folgewerts findet z.B. bei der horizontalen und/oder vertikalen Schlauchbeutelmaschine aus dem Bereich Verpackung zur Ausführung der Druckmarkenkorrektur statt. Generell ist ein folgeseitiges leitwertbezogenes Korrekturprofil geeignet bei druckmarkenbehafteten Folgeachsen.

Die folgeachsseitige Dynamik der Offset Bewegung ergibt sich aus der am Befehl vorgegebenen Verschiebung des Folgewerts und dem angegebenen effektiven Leitwertweg, die zu einem korrigierten Folgewert 20' führen. Bei aktivem Kurvenscheiben- und Getriebegleichlauf wird die Verschiebung des Folgewerts über den angegebenen effektiven Leitwertweg geschwindigkeitsstetig und beschleunigungsstetig von der Folgeachse herausgefahren. Der Offset Auftrag wirkt als Offset auf den aus dem Gleichlauf berechneten Folgewert 20. Der Offset wird über den angegebenen effektiven Leitwertweg P1P2 sofort oder ab einer als Korrekturstartposition P1 angegebenen effektiven Leitwertposition herausgefahren. Der effektive Leitwertweg liegt beispielsweise in der aktuellen Bewegungsrichtung des effektiven Leitwerts, in positiver oder in negativer Bewegungsrichtung des effektiven Leitwerts.

Der Folgewert wird nach der Gleichlauffunktion entsprechend den Vorgaben modifiziert, dabei bleibt der Kurvenscheiben- und Getriebegleichlauf selbst aktiv und synchron.

Dieser verschobene Sollwert, d.h. der korrigierte Folgewert 20', wird schließlich an die Folgeachse ausgegeben.

Beispielsweise werden mit der beschriebenen Methode Druckmarkenkorrekturen beim Gleichlauf über den effektiven Leitwertweg mit der Folgeachse herausfahren. Der Anwender kann vorteilhaft bei der Programmierung der Werte zum Einbringen der Korrekturen beim Gleichlauf diese auf den effektiven Leitwert bezogen vorgeben.

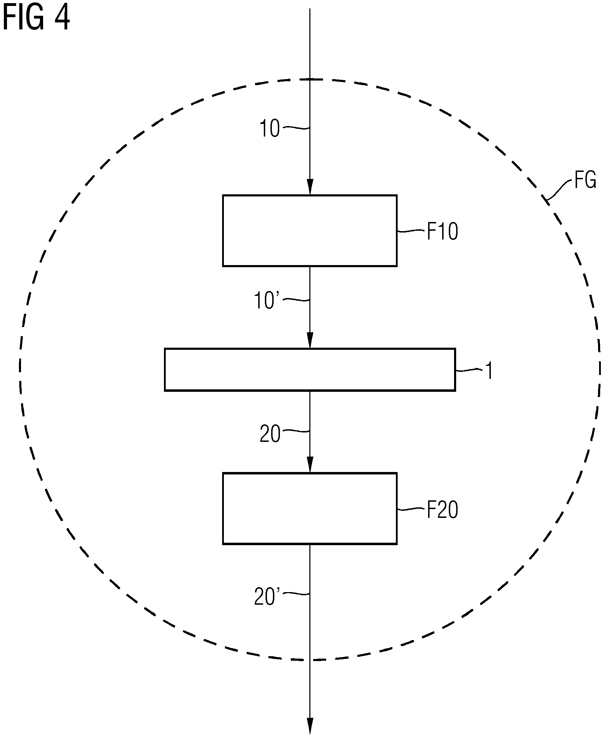

In einem dritten Ausführungsbeispiel werden beide Korrekturmechanismen kumulativ eingesetzt. Sowohl der Leitwert 10 vor Übergabe an die Gleichlauffunktion 1 kann korrigiert werden, als auch der berechnete Folgewert 20, der dann zusätzlich korrigiert wird. Dies ist im Ablaufdiagramm in der Logik der Figuren 1 und 3 in der Figur 4 veranschaulicht.

Diese Variante ist besonders vorteilhaft, wenn beispielsweise eine Schlauchbeutelmaschine selbst wiederum Teil einer übergeordneten Maschine ist, und der Leitwert der Schlauchbeutelmaschine von dem Leitwert der Gesamtmaschine über eine flexible Phasenverschiebung oder eine Untersetzung abgeleitet wird.

## Patentansprüche

1. Verfahren zur Korrektur eines Leitwertes (10) und/oder eines Folgewertes (20) einer Gleichlauffunktion (1), wobei der Leitwert (10) und/oder der Folgewert (20) mittels einer Korrekturfunktion (f1) korrigiert wird/werden, wobei ein Korrekturbereich der Korrekturfunktion (f1) mittels eines effektiven Leitwertweges (P1P2) vorgegeben wird, wobei ein Wirkbeginn der Korrekturfunktion (f1) mittels einer effektiven Leitwertposition (P1) vorgegeben wird, wobei der korrigierte Leitwert (10') der Gleichlauffunktion (1) als Eingabe übergeben wird und/oder der korrigierte Folgewert (20') als Sollwert an einer Folgeachse ausgegeben wird.

2. Verfahren nach Anspruch 1, wobei die Korrekturfunktion (f1) mittels einer systembestimmten Funktion, insbesondere einer Polynomfunktion, insbesondere einer Polynomfunktion mit trigonometrischem Anteil, über den Leitwert (10) abgefahren wird.

3. Verfahren nach einem der vorstehenden Ansprüche, wobei die Korrekturfunktion (f1) mittels einer Korrekturstartposition (P1) und insbesondere zusätzlich einer Korrekturendposition (P2) definiert wird.

4. Verfahren nach einem der vorstehenden Ansprüche, wobei der Wirkbeginn und der effektive Leitwertweg optimal bezogen auf einen auszuführenden Prozess gewählt werden.

5. Verfahren nach einem der vorstehenden Ansprüche, wobei die Korrekturfunktion (f1) als eine Funktion in Abhängigkeit von einer Leitwertposition definiert wird.

6. Verfahren nach einem der vorstehenden Ansprüche, wobei die Korrekturfunktion (f1) stetig mindestens in der ersten und zweiten Ableitung ist.

7. Verfahren nach einem der vorstehenden Ansprüche, wobei die Korrekturfunktion (f1) eine Polynomfunktion, ein Spline, und/oder eine trigonometrische Funktion ist.

8. Verfahren nach einem der vorstehenden Ansprüche, wobei zur Definition der Korrekturfunktion (f1) ein maximaler Korrekturwert in Abhängigkeit von zumindest einer der Größen Leitwertgeschwindigkeit, aktueller Getriebefaktor der Gleichlauffunktion, maximale Dynamikwerte der Achse oder vorgegebener effektiver Leitwertweg ermittelt wird.

9. Verfahren nach einem der vorstehenden Ansprüche, wobei die Korrekturfunktion (f1) mit einem Beenden des Gleichlaufs beendet wird.

10. Steuerungseinrichtung zur Korrektur eines Leitwertes (10) und/oder eines Folgewertes (20) einer Gleichlauffunktion (1), aufweisend einen Steuerungsprogrammbaustein zur Durchführung des Verfahrens nach einem der vorstehenden Ansprüche.

11. Steuerungseinrichtung nach Anspruch 10, wobei der Steuerungsprogrammbaustein als ein PLC-Open Baustein ausgebildet ist.
